# EUROPÄISCHE PATENTANMELDUNG

(11) **EP 4 309 883 A1**
(43) Veröffentlichungstag der Anmeldung: **24.01.2024**
(21) Anmeldenummer: 23185839.0
(22) Anmeldetag: 17.07.2023
(51) Int. Cl.: B29C 70/24, B29C 41/30, E04C 5/07, B29C 59/02, B29C 53/56, E04C 5/12, B29L 31/00

(54) **VERFAHREN ZUM HERSTELLEN EINES HALBZEUGS AUS EINEM FASERVERBUNDWERKSTOFF FÜR EIN LAST ÜBERTRAGENDES BAUTEIL, HALBZEUG FÜR EIN LAST ÜBERTRAGENDES BAUTEIL SOWIE LAST ÜBERTRAGENDES BAUTEIL**

(30) Priorität: 19.07.2022 DE 102022118065; 30.11.2022 DE 102022131696
(71) Anmelder: HA-CO Carbon GmbH, 86757 Wallerstein (DE)
(72) Erfinder: Hummel, Danny, 86748 Marktoffingen (DE)
(74) Vertreter: Epping - Hermann - Fischer

(57) **Zusammenfassung**

Die Erfindung betrifft ein Verfahren zum Herstellen eines Halbzeugs aus einem Faserverbundwerkstoff für ein Last übertragendes Bauteil, aufweisend die Schritte:
- Bereitstellen eines Rovings,
- Tränken des Rovings mit einem Matrixwerkstoff,
- Umwickeln des getränkten Rovings mit einem Faden, so dass als Halbzeug ein Faserstrang mit einem vorbestimmten Profilquerschnitt gebildet ist.

Die Erfindung betrifft auch ein Halbzeug für ein Last übertragendes Bauteil sowie ein Last übertragendes Bauteil.

## Beschreibung

Die Erfindung betrifft ein Verfahren zum Herstellen eines Halbzeugs aus einem Faserverbundwerkstoff für ein Last übertragendes Bauteil. Die Erfindung betrifft weiter ein Halbzeug für ein Last übertragendes Bauteil und ein Last übertragendes Bauteil.

Es wird ein Faserstrang als Halbzeug für beispielsweise Betonbewehrungen, Zug- Druckstreben, Abspannungen für Brücken und Masten, Biegefedern, und Ähnliches bereitgestellt.

Typischerweise werden imprägnierte Faserstränge klassisch, wie beim Nasswickelverfahren üblich, mit einem ungebündelten Roving hergestellt.

Ziel der vorliegenden Erfindung ist es, unter anderem, einen Faserstrang als Halbzeug herzustellen, welcher hinsichtlich seiner Formgebung für bestimmte Anwendungszwecke optimiert ist.

Zunächst wird das Verfahren zur Herstellung eines Halbzeugs angegeben.

In mindestens einer Ausführungsform wird bei dem Verfahren ein Roving bereitgestellt. Der Roving wird dann mit einem Matrixwerkstoff, insbesondere Harz beziehungsweise Flüssigharz, getränkt und anschließend mit einem Faden umwickelt. Beispielweise werden mehrere einzelne Rovings einzeln getränkt, anschließend zu einem Rovingbündel gebündelt und dieses getränkte Rovingbündel mit dem Faden umwickelt. Dadurch wird ein Faserstrang (aus einem Roving oder dem Rovingbündel) als Halbzeug mit einem vorbestimmten Profilquerschnitt hergestellt.

Im Gegensatz zu den bekannten Fertigungsverfahren neigt der Roving/Faserstrang nicht dazu, sich flach und breit auf dem zu bewickelndem Kern abzulegen, wodurch scharfe Kanten entstehen würden, die für viele Anwendungszwecke des Faserstrangs unerwünscht wären, etwa als ein Bewehrungskörper für Betonbauten. Vielmehr lässt sich ein gewünschter Profilquerschnitt definiert einstellen, etwa ein annähernd kreisförmiger Strangquerschnitt.

Ein solcher Strangquerschnitt ist auch für die anderen genannten Anwendungsfälle wünschenswert.

Die Erfindung erreicht also, einen nicht ausgehärteten Faserstrang als Halbzeug herzustellen, welcher durch Umwickeln mit einem Faden einen runden oder insbesondere kreisförmigen Querschnitt erhält, der beim Weiterverarbeiten erhalten bleibt.

Das Tränken des Faserstrangs erst nach dem Bündeln und Umwickeln, was zu einer nicht idealen Tränkung vor allem im Kern des Strangs führen würde, wird vermieden. Der Erfinder hat erkannt, dass durch das beschriebene Verfahren besonders gute, Last übertragende Bauteile geschaffen werden können, indem einer oder mehrere der hergestellten Faserstränge, das heißt eine oder mehrere Halbzeuge, zu bestimmten Strukturen weiterverarbeitet werden. Besonders hinsichtlich Materialeinsatz und Gewichtseinsparungen lassen sich besonders herausragende Eigenschaften erzielen.

Wie erwähnt, können ein oder mehrere Rovings zu dem Faserstrang beziehungsweise Halbzeug verarbeitet werden. Alle hier und im Folgenden gemachten Angaben zu einem Roving sind auch für alle weiteren Rovings offenbart. Beispielsweise umfasst der zumindest eine Roving zumindest 1000 oder zumindest 5000 Fasern. Die Fasern werden auch als Filamente bezeichnet. Der Roving hat zum Beispiel vor dem Tränken einen flachen oder elliptischen Querschnitt.

Für das Umwickeln können ein oder mehrere Fäden verwendet werden. Alle hier und im Folgenden gemachten Angaben zu einem Faden gelten auch für die weiteren Fäden.

Insbesondere wird der zumindest eine Roving so getränkt, dass er nach dem Tränken einen Faservolumengehalt zwischen einschließlich 40 % und einschließlich 80 %, bevorzugt zwischen einschließlich 50 % und einschließlich 75 % hat. Entsprechend ist der Volumengehalt des Matrixwerkstoffs dann zwischen 20 % und 60 %, bevorzugt zwischen 25 % und 50 %. Der Roving ist also besonders gut mit dem Matrixwerkstoff durchtränkt.

Gemäß zumindest einer Ausführungsform ist ein Profilquerschnitt des Faserstrangs ein runder Strangquerschnitt. Der Profilquerschnitt kann insbesondere elliptisch oder kreisförmig sein.

Gemäß zumindest einer Ausführungsform werden im Schritt des Bereitstellens zwei oder mehr Rovings bereitgestellt. Unterschiedliche Rovings sind dabei vor dem Tränken beispielsweise auf unterschiedlichen Rollen beziehungsweise Spulen aufgewickelt. Bei den zwei oder mehr Rovings handelt es sich zum Beispiel um zumindest vier oder zumindest fünf Rovings.

Die unterschiedlichen Rovings können aus demselben oder aus unterschiedlichen Materialien bestehen oder unterschiedliche Materialien umfassen. Zum Beispiel haben die Materialien von unterschiedlichen Rovings unterschiedliche Bruchdehnungen. Dadurch kann eine Fail-Safe-Funktion realisiert werden, wenn der sprödere Roving zuerst reißt.

Gemäß zumindest einer Ausführungsform werden im Schritt des Tränkens die zwei oder mehr Rovings mit dem Matrixwerkstoff getränkt. Die Rovings werden dabei insbesondere getränkt, bevor sie zu dem Faserstrang gebündelt werden. Das heißt, die Rovings werden einzeln getränkt. Beispielsweise werden je zwei Rovings räumlich voneinander getrennt in einer Tränkvorrichtung mit dem Matrixwerkstoff imprägniert. Dadurch wird sichergestellt, dass alle Einzel-Filamente mit Matrixwerkstoff benetzt und somit an der Kraftübertragung beteiligt werden.

Gemäß zumindest einer Ausführungsform werden vor dem Schritt des Umwickelns die zwei oder mehr getränkten Rovings zu einem Rovingbündel gebündelt. Zum Beispiel werden die Rovings miteinander verdrillt. Alternativ können die Rovings unverdrillt, beziehungsweise ohne miteinander verdreht zu werden, gebündelt werden. Beim Bündeln werden die Rovings insbesondere miteinander in Kontakt gebracht. Weiterhin wird dabei etwaige eingeschlossene Luft nach außen gedrängt und aus dem Strang entfernt.

Gemäß zumindest einer Ausführungsform wird im Schritt des Umwickelns das getränkte Rovingbündel mit dem Faden umwickelt. Das heißt, die zwei oder mehr Rovings des Rovingbündels werden gemeinsam mit zumindest einem Faden umwickelt.

Gemäß zumindest einer Ausführungsform werden im Schritt des Umwickelns zwei Fäden oder Paare von jeweils mehreren Fäden in gegenläufige Richtungen, das heißt in positiver und negativer Umfangsrichtung, um den Faserstrang gewickelt. Die beiden Fäden bilden nach dem Umwickeln zum Beispiel eine eingängige Doppelhelix; im Falle von Paaren aus jeweils mehreren Fäden bilden diese beispielsweise eine mehrgängige Doppelhelix. Die beiden Fäden beziehungsweise Paare von Fäden können gleichzeitig oder nacheinander um den Faserstrang gewickelt werden. Alternativ kann aber auch nur ein einziger Faden um den zumindest einen getränkten Roving gewickelt werden.

Nach dem Umwickeln mit dem Faden kann das Halbzeug zum Beispiel auf eine Rolle/Spule aufgewickelt werden. Das Halbzeug kann dann vor der Weiterverarbeitung gelagert werden. Insbesondere werden Lagertemperatur und Matrixwerkstoff so gewählt, dass das Halbzeug elastisch und/oder weiterverarbeitbar bleibt.

Zum Beispiel kann als Matrixwerkstoff Epoxidharz mit einer Glasübergangstemperatur zwischen einschließlich 80 °C und 130°C verwendet werden. Das resultierende Halbzeug kann zum Beispiel bei einer Temperatur zwischen einschließlich -18°C und -30°C über mehrere Tage, zum Beispiel zumindest sechs Wochen gelagert werden, wobei das Halbzeug elastisch und/oder weiterverarbeitbar bleibt.

Als nächstes wird das Halbzeug angegeben. Das Halbzeug wird beispielsweise mit dem hier beschriebenen Verfahren hergestellt. Alle im Zusammenhang mit dem Verfahren offenbarten Merkmale sind daher auch für das Halbzeug offenbart und umgekehrt.

In mindestens einer Ausführungsform des Halbzeugs ist das Halbzeug ein Faserstrang, der mit einem Faden umwickelt ist. Der Faserstrang weist eine Vielzahl von Fasern auf, die in einem Matrixwerkstoff eingebettet sind. Der Faserstrang hat einen vorbestimmten, insbesondere runden, Profilquerschnitt. Der Faservolumengehalt ist überall im Faserstrang höchstens 80 % und/oder zumindest 40 %, insbesondere höchstens 75 % und/oder zumindest 50 %.

Der Faden hält beispielsweise die Fasern des Faserstrangs zusammen und wirkt einer Verformung des Profilquerschnitts entgegen. "Eingebettet" bedeutet, dass die Fasern mit dem Matrixwerkstoff getränkt sind beziehungsweise wurden.

Dass der Faservolumengehalt überall im Faserstrang in einem gewissen prozentualen Bereich liegt meint hier, dass in jeder beliebig gewählten Region innerhalb des Faserstrangs der über das Volumen der Region gemittelte Faservolumengehalt in dem gewissen prozentualen Bereiche liegt. Die gewählte Region kann dabei beliebig groß sein, solange eine sinnvolle Aussage über den Faservolumengehalt möglich ist. Zum Beispiel verlaufen durch die beliebig gewählte Region zumindest 50 oder zumindest 100 oder zumindest 1000 Fasern beziehungsweise Filamente. Anders ausgedrückt: Der mittlere Faservolumengehalt jeder beliebig gewählten Region innerhalb des Faserstrangs, durch die beispielsweise zumindest 50 oder zumindest 100 oder zumindest 1000 Fasern verlaufen, liegt im Bereich zwischen einschließlich 40 % und 80 % oder zwischen einschließlich 50 % und 75 %.

Der zumindest eine Faden umgibt die Fasern des Faserstrangs zum Beispiel helixförmig.

Das Halbzeug kann beispielsweise zumindest 1000 oder zumindest 10000 oder zumindest 20000 Fasern aufweisen. Das Halbzeug ist zum Beispiel auf eine Rolle/Spule aufgewickelt und von dieser abrollbar.

Als nächstes wird das Last übertragende Bauteil angegeben.

In mindestens einer Ausführungsform weist das Last übertragende Bauteil zumindest einen, das heißt einen oder mehrere Faserstränge auf, der mit einem Faden umwickelt ist. Der Faserstrang weist eine Vielzahl von Fasern auf, die in einem Matrixwerkstoff eingebettet sind. Der Faserstrang hat einen vorbestimmten, insbesondere runden, Profilquerschnitt. Der Faservolumengehalt ist überall im Faserstrang höchstens 80 % und zumindest 40 %.

Der zumindest eine Faserstrang des Bauteils ist insbesondere das hier beschriebene Halbzeug oder ist aus dem hier beschriebenen Halbzeug gebildet, zum Beispiel durch einen Aushärteprozess. Alle im Zusammenhang mit dem Halbzeug offenbarten Merkmale sind daher auch für den zumindest einen Faserstrang des Last übertragenden Bauteils offenbart und umgekehrt.

Das Last übertragende Bauteil kann mehrere Faserstränge aufweisen, wobei alle im Zusammenhang mit einem Faserstrang offenbarten Merkmale auch für die weiteren Faserstränge offenbart sind.

Gemäß zumindest einer Ausführungsform weist der zumindest eine Faserstrang eine Mehrzahl von Rovings auf. Zum Beispiel weist der Faserstrang zwei oder mehr, bevorzugt vier oder mehr, Rovings auf.

Gemäß zumindest einer Ausführungsform ist der zumindest eine Faserstrang mit Hilfe des Verfahrens nach einer der hier beschriebenen Ausführungsformen hergestellt. Insofern sind alle für das Verfahren offenbarten Merkmale auch für das Last übertragende Bauteil offenbart und umgekehrt.

Gemäß zumindest einer Ausführungsform ist das Last übertragende Bauteil eine Betonbewehrung oder eine Zug-Druckstrebe oder eine Abspannung, insbesondere eine Abspannung für Brücken und Masten, oder eine Biegefeder.

Gemäß zumindest einer Ausführungsform sind die Fasern/Filamente des Faserstrangs Kohlefasern oder Glasfasern oder Aramidfasern oder Naturfasern oder andere Hochleistungsfasern. Auch eine Kombination aus verschiedenen dieser Faserarten ist denkbar.

Gemäß zumindest einer Ausführungsform weist der Matrixwerkstoff ein duroplastisches Kunstharz, wie Epoxidharz, Polyurethanharz und/oder Vinylesterharz, auf oder besteht daraus.

Gemäß zumindest einer Ausführungsform ist der Faden ein Polyesterfaden. Es kann der Faden selbst Hochleistungsfasern, zum Beispiel die oben genannten Hochleistungsfasern, umfassen oder daraus bestehen.

Gemäß zumindest einer Ausführungsform weist das Last übertragende Bauteil mehrere Faserstränge, zum Beispiel zumindest vier oder zumindest zehn oder zumindest 20 Faserstränge auf. Die Faserstränge können miteinander verdrillt und/oder miteinander verwebt und/oder miteinander verflochten sein. Zum Beispiel sind die Faserstränge dauerhaft miteinander verbunden.

Nachfolgend wird ein hier beschriebenes Verfahren zum Herstellen eines Halbzeugs, ein hier beschriebenes Halbzeug sowie ein hier beschriebenes Last übertragendes Bauteil unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch nicht zwangsläufig maßstäbliche Bezüge dargestellt, vielmehr können einzelne Elemente zum besseren Verständnis übertrieben groß dargestellt sein. Soweit Elemente in den verschiedenen Figuren in ihrer Funktion übereinstimmen, wird ihre Beschreibung nicht für jede der folgenden Figuren wiederholt. Aus Gründen der Übersichtlichkeit sind Elemente möglicherweise nicht in allen Abbildungen mit entsprechenden Bezugszeichen versehen.

In Figuren zeigen:
Figuren 1 und 2 schematische Darstellungen von Ausführungsbeispielen des Halbzeugs,
Figur 3 eine schematische Darstellung eines Ausführungsbeispiels des Last übertragenden Bauteils und
Figur 4 eine schematische Darstellung eines Ausführungsbeispiels des Verfahrens zum Herstellen eines Halbzeugs.

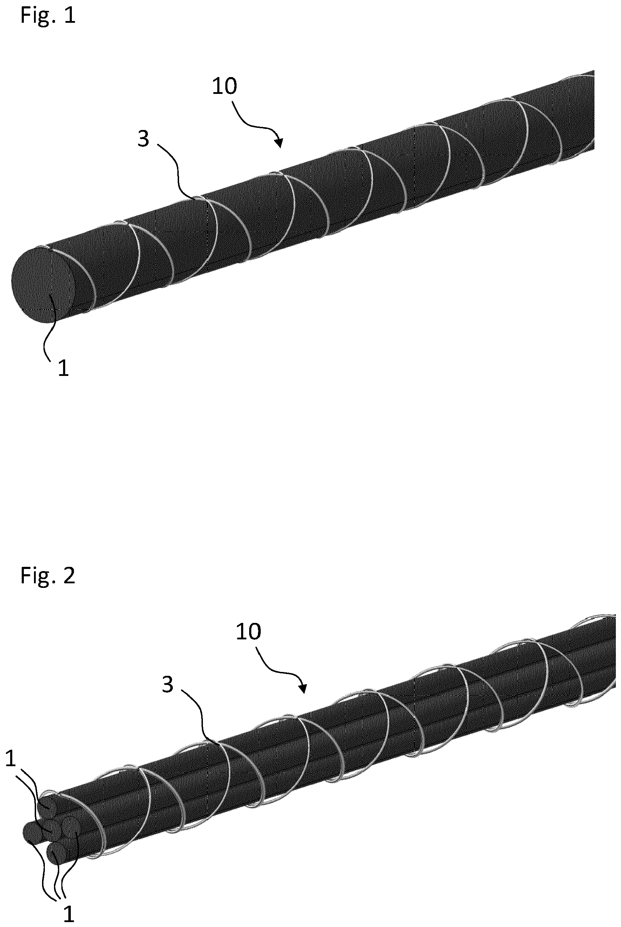

Figur 1 zeigt ein erstes Ausführungsbeispiel eines Halbzeugs 10. Das Halbzeug 10 ist ein Faserstrang. Der Faserstrang 10 umfasst ein Vielzahl, zum Beispiel zumindest 1000 oder zumindest 5000 Fasern beziehungsweise Filamente. Der Faserstrang 10 ist aus einem Roving 1 gefertigt beziehungsweise umfasst einen Roving 1. Die Fasern sind in einem Matrixwerkstoff eingebettet. Bei dem Matrixwerkstoff handelt es sich beispielsweise um ein Epoxidharz, Polyurethanharz und/oder ein Vinylesterharz. Die Fasern sind beispielsweise Kohle-, Glas-, Aramid- oder Naturfasern oder ähnlichen Fasern.

Der Faservolumengehalt in dem Faserstrang 10 ist beispielsweise überall innerhalb des Faserstrangs höchstens 80 % und zumindest 40 %, insbesondere höchstens 75 % und mindestens 50 %.

Der Faserstrang 10 umfasst ferner zwei Fäden 3, die gegenläufig um die Fasern gewickelt sind, so dass sie in Form einer Doppelhelix um die Fasern verlaufen. Die Fäden 3 halten die Fasern zusammen und den Faserstrang 10 in Form, so dass der runde beziehungsweise kreisförmige Profilquerschnitt des Faserstrangs 10 erhalten bleibt. Die Fäden 3 sind zum Beispiel Polyesterfäden.

Figur 2 zeigt ein zweites Ausführungsbeispiel des Halbzeugs 10. In diesem Fall ist das Halbzeug 10 ein Faserstrang mit fünf Rovings 1 beziehungsweise ein Faserstrang 10, der aus fünf Rovings 1 gefertigt ist. Jeder Roving 1 umfasst dabei beispielsweise zumindest 1000 Fasern. Die Rovings 1 sind zu einem Rovingbündel gebündelt und wieder mit zwei gegenläufig verlaufenden Fäden 3 umwickelt, um den runden Profilquerschnitt des Faserstrangs 10 aufrechtzuerhalten. Auch hier ist der Faservolumengehalt überall innerhalb des Faserstrangs 10 bevorzugt zwischen einschließlich 50 % und 70 %.

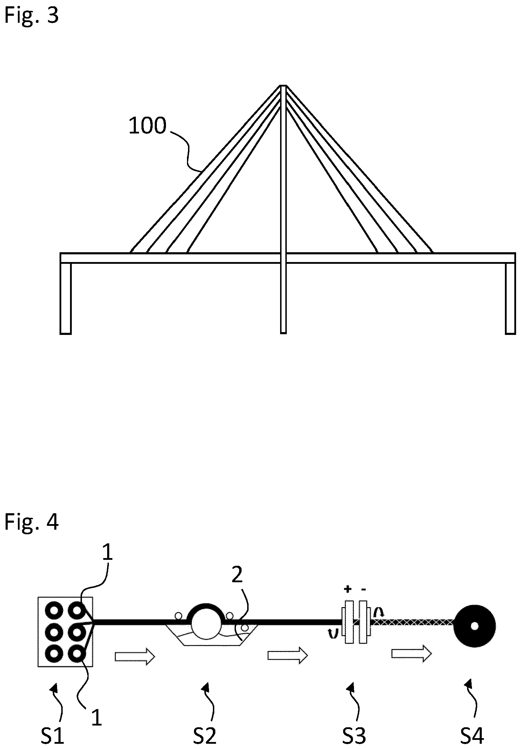

Figur 3 zeigt ein Ausführungsbeispiel eines Last übertragenden Bauteils 100. Das Last übertragende Bauteil 100 umfasst dabei einen oder mehrere der zuvor beschriebenen Faserstränge 10. Die Faserstränge 10 sind zu einem Seil verdreht oder geflochten. Das Last übertragende Bauteil 100 ist vorliegend eine Abspannung für eine Brücke.

Figur 4 zeigt ein Ausführungsbeispiel des Verfahrens zur Herstellung eines Halbzeugs, beispielsweise des Halbzeugs der Figur 2. Dabei werden in einem Schritt S1 mehrere, jeweils auf Spulen eines Spulenständers aufgewickelte Rovings 1 bereitgestellt. Diese Rovings 1 werden von den jeweiligen Spulen abgewickelt und durch ein Bad aus einem flüssigen Matrixwerkstoff 2 gezogen (Schritt S2) und dabei mit dem Matrixwerkstoff 2 getränkt. Beim Tränken sind die Rovings 1 bevorzugt räumlich voneinander separiert, so dass die Rovings 1 einzeln getränkt werden. Dadurch kann der Matrixwerkstoff alle Rovings 1 vollständig oder nahezu vollständig durchdringen, so dass in jedem Roving 1 ein Faservolumengehalt zwischen beispielsweise 50 % und 75 % erreicht wird.

Nach dem Bad in dem Matrixwerkstoff werden die Rovings 1 gebündelt und zwar zu einem Rovingbündel. Die Rovings 1 beziehungsweise das Rovingbündel wird dann mit einem oder mehreren Fäden umwickelt (Schritt S3) und damit zu einem kreisförmigen Querschnitt zusammengeschnürt. Auf diese Weise entsteht ein Halbzeug in Form eines Faserstrangs mit einem vorbestimmten Profilquerschnitt.

Mittels einer Umwicklungsmaschine, ähnlich dem Pull-Winding-Verfahren, kann der Faserstrang 10 kontinuierlich hergestellt werden.

Der Faserstrang 10 beziehungsweise das Halbzeug 10 wird dann auf eine Spule aufgewickelt (Schritt S4). Durch geeignete Wahl des Matrixwerkstoffs und der Lagertemperatur kann das so entstehende Halbzeug 10 so gelagert werden, dass es weiterverarbeitbar bleibt, zum Beispiel flexibel bleibt. Alternativ kann das Halbzeug 10 aber auch direkt nach dem Umwickeln mit dem oder den Fäden weiterverarbeitet werden.

Für die Zwischenlagerung des Halbzeuges eignet sich beispielsweise das Aufspulen auf eine Kunststoff- oder Pappspule.

Die Besonderheit bei diesem Verfahren besteht darin, dass durch die Tränkung vor dem Bündeln der einzelnen Rovings eine konstante Tränkung bis in die Strangmitte, unabhängig vom Strangdurchmesser, erreicht wird. So kann ein Faserstrang hergestellt werden, welcher ideal getränkt ist (Faservolumengehalt 50-75%).

Verschiedene Prüfverfahren haben bereits gezeigt, dass die mechanischen Eigenschaften der Carbonfaser so fast vollständig genutzt werden können.

Durch die vorgelagerte Herstellung des Strangs mittels Umwicklungsmaschine kann das daraus entstandene Halbzeug für viele Einsatzbereiche verwendet werden.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn diese Merkmale oder diese Kombination selbst nicht explizit in den Patentansprüchen oder Ausführungsbeispielen angegeben ist.

### Bezugszeichenliste:

- 1: Roving
- 2: Matrixwerkstoff
- 3: Faden
- 10: Halbzeug/Faserstrang
- 100: Last übertragendes Bauteil
- S1 bis S4: Verfahrensschritte

## Patentansprüche

1. Verfahren zum Herstellen eines Halbzeugs (10) aus einem Faserverbundwerkstoff für ein Last übertragendes Bauteil (100), aufweisend die Schritte:
- Bereitstellen eines Rovings (1),
- Tränken des Rovings (1) mit einem Matrixwerkstoff (2),
- Umwickeln des getränkten Rovings (1) mit einem Faden (3), so dass als Halbzeug (10) ein Faserstrang mit einem vorbestimmten Profilquerschnitt gebildet ist.

2. Verfahren nach Anspruch 1, wobei der vorbestimmte Profilquerschnitt ein runder, insbesondere im Wesentlichen kreisförmiger, Strangquerschnitt ist.

3. Verfahren nach Anspruch 1 oder 2, wobei
- im Schritt des Bereitstellens zwei oder mehr Rovings (1) bereitgestellt werden,
- im Schritt des Tränkens die zwei oder mehr Rovings (1) mit dem Matrixwerkstoff (2) getränkt werden,
- vor dem Schritt des Umwickelns die zwei oder mehr Rovings (1) zu einem Rovingbündel (11) gebündelt werden, und
- im Schritt des Umwickelns das getränkte Rovingbündel (11) mit dem Faden (3) umwickelt wird.

4. Halbzeug (10) in Form eines Faserstrangs, der mit einem Faden (3) umwickelt ist, wobei
- der Faserstrang (10) eine Vielzahl von Fasern aufweist, die in einem Matrixwerkstoff (2) eingebettet sind,
- der Faserstrang (10) einen vorbestimmten, insbesondere runden, Profilquerschnitt aufweist,
- der Faservolumengehalt überall im Faserstrang (10) höchstens 80 % und zumindest 40 % ist.

5. Last übertragendes Bauteil (100), aufweisend
- zumindest einen Faserstrang (10), der mit einem Faden (3) umwickelt ist, wobei
- der Faserstrang (10) eine Vielzahl von Fasern aufweist, die in einem Matrixwerkstoff (2) eingebettet sind,
- der Faserstrang (10) einen vorbestimmten, insbesondere runden, Profilquerschnitt aufweist,
- der Faservolumengehalt überall im Faserstrang (10) höchstens 80 % und zumindest 40 % ist.

6. Last übertragendes Bauteil (100) nach Anspruch 5, wobei
- der Faserstrang (10) eine Mehrzahl von Rovings (1) aufweist.

7. Last übertragendes Bauteil (100) nach Anspruch 5 oder 6, wobei der zumindest eine Faserstrang (10) mit Hilfe des Verfahrens nach einem der Ansprüche 1 bis 3 hergestellt ist.

8. Last übertragendes Bauteil (100) nach einem der Ansprüche 5 bis 7, wobei das Last übertragende Bauteil (100) eine Betonbewehrung, eine Zug-Druckstrebe, eine Abspannung, insbesondere eine Abspannung für Brücken und Masten, oder eine Biegefeder ist.

9. Last übertragendes Bauteil (100) nach einem der Ansprüche 5 bis 8, wobei
- die Fasern des Faserstrangs (10) Kohle-, Glas-, Aramid-oder Naturfasern sind,
- das Matrixwerkstoff (2) ein Epoxidharz, Polyurethanharz und/oder Vinylesterharz aufweist,
- der Faden (3) ein Polyesterfaden ist.

10. Last übertragendes Bauteil (100) nach einem der Ansprüche 5 bis 9, aufweisend
- mehrere Faserstränge (10), die miteinander verdrillt, verwebt und/oder verflochten sind.
